# EUROPEAN PATENT SPECIFICATION

(11) **EP 1 683 628 B1**
(45) Date of publication and mention of the grant of the patent: **15.08.2012**
(21) Application number: 04792051.7
(22) Date of filing: 05.10.2004
(51) Int. Cl.: B29D 30/48

(54) **A tire manufacturing method and an apparatus for forming a preset bead**
Reifenherstellungsverfahren und Vorrichtung zum Formen voreingestellter Wülste
Procédé de fabrication de pneumatiques et appareil de moulage de talons prédéfinis

(30) Priority: 07.10.2003 JP 2003348223
(43) Date of publication of application: 26.07.2006
(73) Proprietor: Bridgestone Corporation, Tokyo 104-8340 (JP)
(72) Inventor: SATA, Yoshiyuki, c/o BRIDGESTONE CORPORATION, Kodaira-shi, Tokyo 187-8531 (JP)
(74) Representative: Oxley, Robin John George
(86) International application number: PCT/JP2004/014640
(87) International publication number: WO 2005/035230

(56) References cited:
- EP-A- 0 624 456
- EP-A- 1 000 733
- EP-A- 1 060 872
- EP-A2- 0 472 958
- EP-A2- 1 216 815
- JP-A- 3 500 992
- JP-A- 9 216 298
- JP-A- 10 291 261
- JP-A- 11 105 155
- JP-A- 50 058 180
- JP-A- 2001 179 847
- JP-A- 2002 187 216
- JP-A- 2002 187 218
- JP-B2- 5 041 426
- US-A- 2 949 136
- US-A- 3 895 986
- US-A- 4 354 892
- US-A- 5 080 738
- US-A- 5 114 512
- US-A- 5 203 938
- US-A- 5 632 836
- US-B1- 6 328 835

## Description

### TECHNICAL FIELD

The present invention relates to a method of manufacturing a tire in which preset beads each preformed by mounting a bead filler on a bead core are disposed radially outward of a carcass band and both side portions of the carcass band are turned around the preset beads to build the tire.

### RELATED ART

Such a tire manufacturing method has been employed that preset-beads, each preformed by mounting a bead filler on a bead core, are disposed radially outward of a carcass band and both side portions of the carcass band are turned around the preset beads to build the tire (see document JP 02 283434-A, for example). This method has an advantage that it can save more more space around a building drum and save time necessary for the assembly as compared with the method in which the bead core and the bead filler are separately assembled on a building drum. In this method, particularly when it is used with a so-called drum-flow building system which transfers a building drum from a station to another station and assembles components of a tire in the respective stations, the bead core and the bead filler have to be assembled in the station where the center portion of the carcass band is expanded radially and both side portions of the carcass band are turned around. Therefore, there is a problem that the process in the station needs much time and the cycle time of the whole system is degraded, so it has been practically demanded in actual use.

The preset bead is conventionally formed by winding a rubber having a cross-sectional shape generally identical to that of a green tire over the bead core for only one lap. Though this method has advantages that time required for the winding may be less because the rubber is wound for only one lap, and that the preset bead of this method can be formed by a simple apparatus, this method has below-mentions disadvantages.

First, in this method, a nozzle for the bead filler rubber needs to be replaced to provide various cross-sectional shapes corresponding to various tire sizes. The replacement, however, is time consuming, so that considerable numbers of the bead fillers with a respective tire size need to be extruded in one time to maintain the operation rate of the extruder. Meanwhile, in the tire manufacturing process which adopts a multiple sizes mixed flow production, tires with a single size are not built in a mass. Thus, it results in unnecessary intermediate stocks of the preset beads, which wastes the space and the management of the intermediate stocks.

Second, in the method in which the bead filler rubber is wound for only one lap, joint portions gathers at one point in the circumference direction. Such a joint portion may cause unevenness in the circumference direction of the preset bead, which may reduce the tire uniformity.

Third, in order to form the bead filler rubber which is linearly extruded and has the above-mentioned cross section into a doughnut-shaped bead filler which extends the radially outward/inward in the cross-section of the tire, the radially outward portion needs to be extended longer than the inward portion does. It is sometimes difficult to make such a extension evenly in the circumferential direction, which is also the cause to reduce the tire uniformity.

Attention is also drawn to the disclosures of JP2001/179,847, US 5,114,512, EP1,216,815 and JP 11-105,155.

### DISCLOSURE OF THE INVENTION

### OBJECT TO BE SOVLED BY THE INVENTION

The present invention has been made in view of the above-mentioned disadvantages and its object is to provide a method of manufacturing a tire in which preset-beads each preformed by mounting a bead filler on a bead core are disposed radially outward of a carcass band and both side portions of the carcass band are turned around the preset beads to build the tire, which method eliminates a need to hold the considerable intermediate stocks and does not deteriorate the tire uniformity due to the unevenness of the preset bead in the circumference direction. Another object of the present invention is to provide a preset bead-forming apparatus used therefor .

### MEANS FOR SOLVING THE PROBLEM

The first aspect of the present invention is a method of manufacturing a tire, as claimed in claim 1.

The second aspect of the present invention is the method of manufacturing a tire according to the first aspect, wherein the ribbon-shaped bead filler rubber is so directed that its thickness direction is aligned to the direction of the central axis of the bead core and the ribbon-shaped bead filler rubber is wound and laminated on a side face of a disk rotating about the central axis of the bead core.

The third aspect of the present invention is an apparatus for forming a preset bead for use in the tire manufacturing method according to the first or second aspect, as claimed in claim 3.

The forth aspect of the present invention is the preset bead-forming apparatus according to the third aspect, wherein the bead core-holding device is composed of magnets which attract and hold the side face of the bead core and a centering device which applies a force to an inner circumference face of the bead core attracted by the magnets to center the bead core, and said apparatus further comprises a ribbon-attaching roller position-controlling means controlling the position of said ribbon-attaching roller.

### EFFECT OF THE INVENTION

According to the tire manufacturing method of the first aspect, because the bead filler is formed with the ribbon-winding process, the nozzle of the extruder does not need to be replaced for a respective size of the bead filler unlike the method in which a rubber having a cross sectional shape substantially identical to that of the bead filler is wound for only one lap and thus the preset beads having various sizes can be manufactured in a mixed flow process. Therefore, it is possible to reduce the intermediate stocks of the preset beads and to suppress the gathering of the joint portion of the bead filler in the circumferential direction to prevent the uniformity of the product tires from being decreased. Moreover, according to the tire manufacturing method of the second aspect, the preset beads can be formed stably and accurately by laminating the ribbon-shaped bead filler rubber on a disk in parallel with the disk.

According to one aspect of the invention, because the bead core-holding device is configured as described above, the side face of the bead core is attracted and held on the disk by the magnets and thereafter a force is applied to the inner circumferential face of the bead core by the centering device to center the bead core. Therefore, it is possible to hold and center the bead cores in various sizes without replacing the centering device.

### BRIEF DESCRIPTION OF THE DRAWINGS

[FIG. 1] FIG. 1 generally illustrates the preset bead-forming apparatus of an embodiment of the present invention.
[FIG. 2] FIG. 2 is a schematic cross sectional view of the disk of the preset bead-forming apparatus of the embodiment of the present invention.
[FIG. 3] FIG. 3 is a schematic view for explaining the preset bead-forming process of the embodiment of the present invention.
[FIG. 4] FIG. 4 is a schematic plan view showing the layout of the preset bead-forming system which is useful for understanding the present invention.
[FIG. 5] FIG. 5 is a schematic diagram for explaining the operation of the bead removing means of the bead core-preparing station which is useful for understanding the present invention.
[FIG. 6] FIG. 6 is a schematic diagram for explaining a mechanism of the bead-handling robot which is useful for understanding the present invention.

### BEST MODE FOR CARRYING OUT THE INVENTION

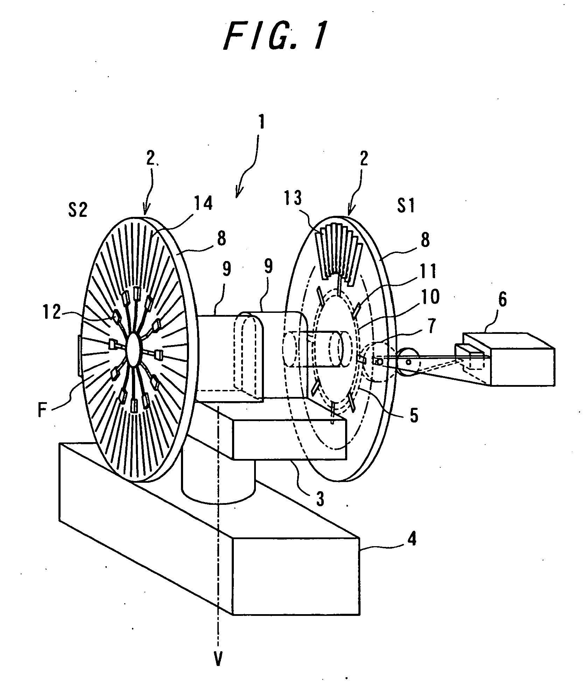

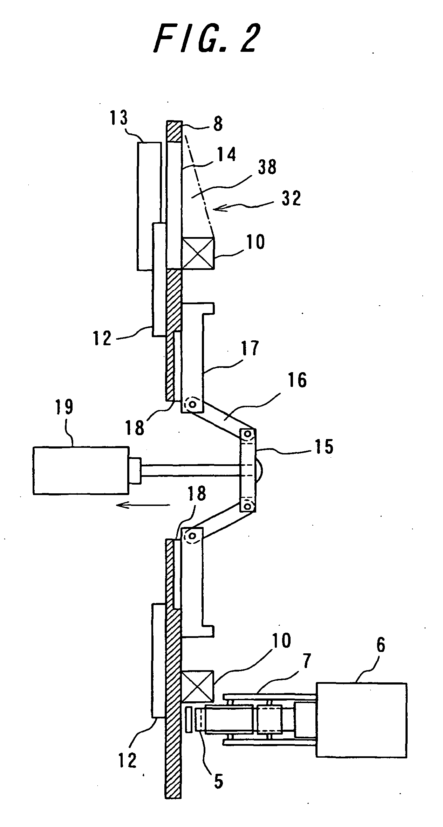

FIG. 1 is a perspective view schematically showing the preset bead-forming apparatus of an embodiment of the present invention and FIG. 2 is a schematic cross-sectional view of the disk of the preset bead-forming apparatus of the embodiment of the present invention taken along the plane including the central axis line. The preset bead-forming apparatus 1 consists of a pair of bead filler-winding portion 2 for forming a bead filler 38 by winding the ribbon-shaped bead filler rubber 5 for several laps, a common base 3 on which the bead filler-winding parts is mounted, a pivotally driving portion 4 supporting the common base 3 to be able to pivotally drive it with the axis line V as the center line, an extruder 6 extruding the ribbon-shaped filler rubber 5 in accordance with its winding, and a ribbon-attaching roller 7 for attaching the extruded ribbon-shaped bead filler rubber 5 to the bead filler-winding part 2. The bead filler-winding parts 2 are so arranged in rotationally symmetric positions that they are mutually overlapped when one of them is rotated by 180 degrees around the axis line V. Each of the bead filler winding part 2 is so configured that it reciprocally moves between a bead filler-forming station S1 and a preset bead-removing station S2 by pivoting. Each bead filler-winding part 2 has vertically arranged disks 8 with one of their disk surfaces being an attaching face F onto which the ribbon-shaped rubber 5 is attached, rotationally driving parts 9 rotationally driving the disks 8, magnets 11 which are mounted along the circumferential direction on the surface of the disk 8 opposed to the attaching face F and attract the side face of the bead core 10 arranged on the attaching face F, a centering device 12 for centering the bead core 10 by applying a force to an inner circumferential face of the bead core attracted and held by the magnets to shift the bead core 10 in relation to the disk 8, and plural stripping bars 13 extending outwardly and inwardly in the radial direction. The stripping bars pass through slits 14 provided on the disk 8 and displace back and forth in the thickness direction of the disk 8 and penetrate through the slit 14, so that the formed preset bead 32 tightly attached on the attaching surface F is stripped off from the disk 8.

The centering device 12 is composed of a bundling board 15 provided on and displacing along the central axis line of the disk 8, plural links 16 one end of which is hingedly connected to the bundling board 15, segments 17 connected to the other end of the respective links and applying a force to the inner circumferential face of the bead core attracted and held by the magnets through expansive/contractive displacements, linear guides 18 guiding the displacements of the segments 17 in the radially outward and inward direction, and air cylinder 19 displacing the bundling board 15 in the axial direction of the disk 8. The centering device 12 is so configured that the segments 17 are expansively/contractively displaced through the links 16 by operating the air cylinder 19. In such a centering device 12, any bead cores 10 within the subject range can be centered, regardless of their sizes ranging from the minimum diameter to maximum diameter, by setting the amount of the displacement of the segment 17 in the radial direction of the disk 8. This enables a mixed-flow production in various sizes.

A method of forming a preset bead 32 by means of the preset bead-forming apparatus 1 will be discussed below. As is shown in FIG. 1, the bead filler-winding portion 2 is placed on the preset bead-removing station S2 and the bead core 10 is arranged on the attaching face F of the disk 8 with the disk 8 and the bead core 10 being substantially concentric. The bead core 10 thus arranged is attracted and held by the magnets 11. In this state, the bead core 10 may be centered by radially expanding the centering device 12. Then, the common base 3 is pivoted 180 degrees about the axis line V to displace the bead filler-winding part 2 holding said bead filler 10 to the bead filler-forming station S1, where the ribbon-shaped bead filler rubber 5 is wound continuously on the attaching face F radially outward of the bead core 10 while rotating the disk 8. In this way, the bead filler is formed. Thereafter, the bead filler thus formed is pressed against and attached to the bead core 10 by a attaching roll such as a stitcher roll, so that a preset bead is formed. Then the common base 3 is pivoted 180 degrees to displace the bead filler-winding part 2 attracting and holding the preset bead again to the preset bead-removing station S1, where the preset bead 32 is stripped from the disk 8 by the stripping bar 13 to transfer the preset bead to the next process.

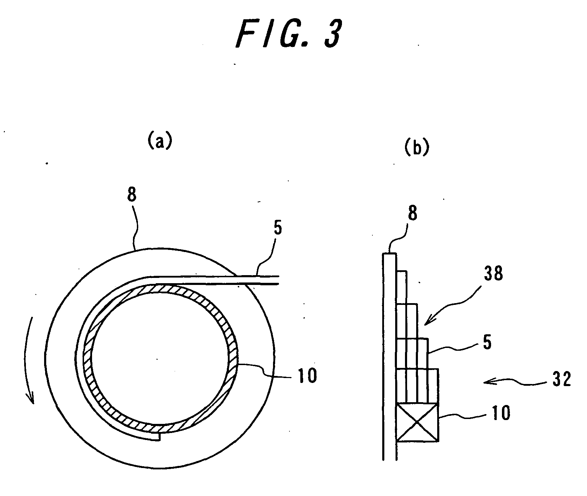

FIG. 3(a) is a schematic view showing an embodiment of the ribbon-shaped filler rubber wound on the disk. A ribbon-shaped filler rubber 5 extruded by the extruder 6 is wound radially outward of the bead core 10 on the disk 8, as is shown in FIG. 3(b). In this example, the ribbon-shaped bead filler rubber 5 is wound for 10 laps in total with being adjacent to the outer circumference of the bead core 10. In a practical process, however, the bead filler 38 is formed by winding the ribbon-shaped bead filler rubber 5 having the width of 6mm and the thickness of 0.5mm until approximately 50 layers are laminated. In this way, by winding and laminating a single kind of the ribbon-shaped bead filler 5 with the small width and thickness for many laps, bead fillers 38 having various sizes can be formed in desired shapes.

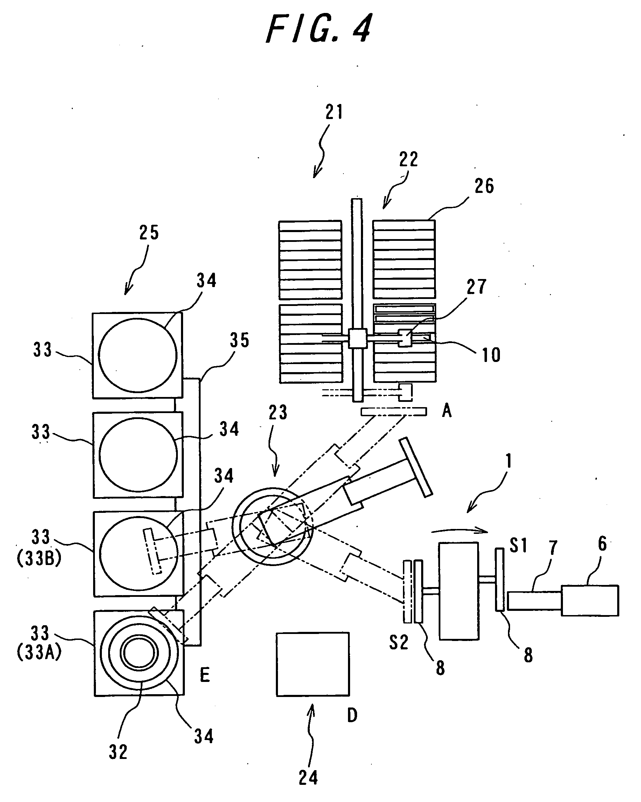

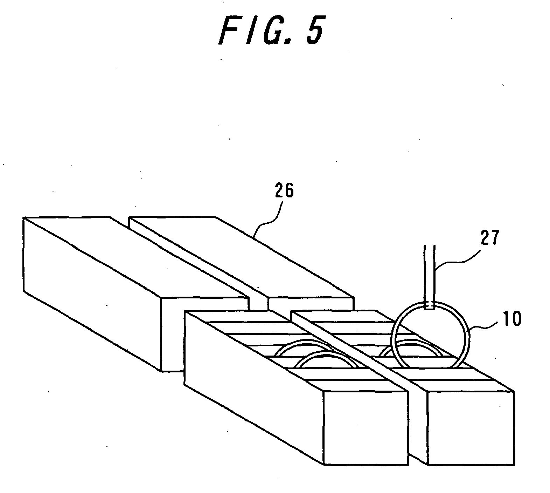

With reference to FIG. 4, the system of forming the preset bead which is useful for understanding the present invention will be explained. The system 21 includes a preset bead-forming apparatus 1; a bead core-preparing station 22 for preparing bead cores supplied to said preset bead-forming apparatus; a bead-handling robot 23 for transferring the bead cores from the bead core-preparing station 22 to the preset bead-forming apparatus 1 as well as transferring the preset beads from the preset bead-forming apparatus 1 to the preset bead storage station 25; a preset bead inspection station 24; and a preset bead storage station 25 for temporally storing the formed preset beads, and each of the components is arranged as shown in the FIG. 4. The bead core preparing station 22 is provided with plural of storage containers 26 each containing bead cores 10 in a mutually different size. A bead core 10 in a size specified by a system-controlling device, which is not shown in the figures, is removed by the bead-removing means 27 from the bead core preparing station 22, as is shown in FIG. 5. The bead core is transferred to the position A by the bead-removing means 25 to pass the bead core to the handling robot 23.

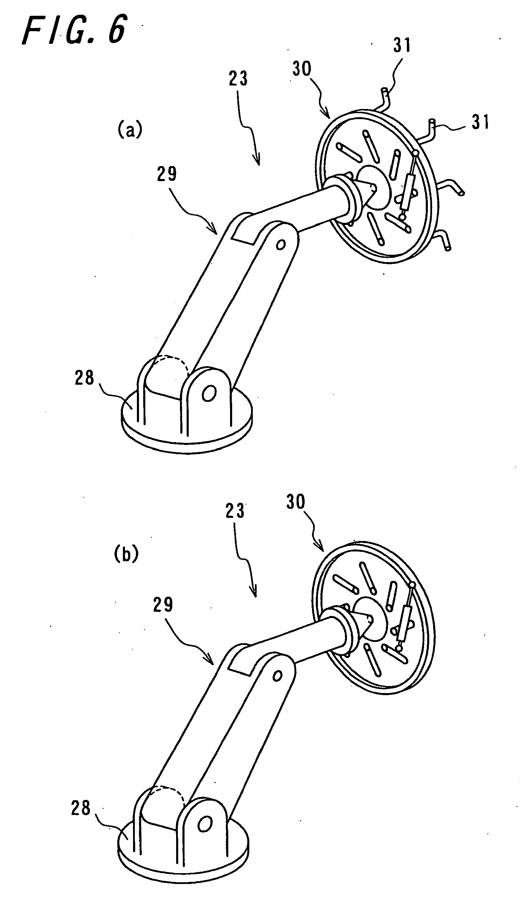

As shown in FIG. 6(a), the handling robot 23 has a base 28 and a multi-joint arm 29,and is pivotally provided with a disk-shaped hand 30 at the tip of the multi-joint arm 29 capable of gripping the bead core 10 and the preset bead. The disk-shaped hand 30 is provided with claw portions 31 which expand/contract outwardly/inwardly in the radial direction and support the bead core from the radially inward direction with its L-shaped corners. As shown in FIG. 6(b), the claw portions 31 are so configured that they can be folded radially inwardly when contracted. The above-mentioned configurations enable the hand 30 to grip the bead cores and the preset beads in various sizes without recognizing their sizes one by one.

Then, the base 28 of the bead handling robot 23 is rotated and the multi-joint arm 29 is stretched/retracted, so that the bead core 10 is passed to the disk 8 of the bead winding part 2 located at the preset bead-removing station S2.Thereafter, by rotating the common base 3 of the preset bead-forming apparatus 1 by 180 degrees, the preset bead 32 formed in the preset bead forming station S1 is located at the preset bead-removing station S2, where the bead-handling robot 23 receives the preset bead 32.

Then, the preset bead 32 is transferred by bead handling robot 23 to the preset bead inspection station 24 at the position designated by the symbol D in the figure. In the preset bead inspection station 24, the transferred preset bead 37 is inspected for its weight and shape and the accepted product is moved to the loading position E by the bead-handling robot 23 and transferred to a carriage 33A of the preset bead storage station 25.

In the preset bead storage station 25, the preset beads in different sizes formed according to the predetermined formation order are stacked one by one on the carriage 33A, interposing a cartridge 34 therebetween. When the number of the stacked preset bead 32 on the carriage 33A reaches a given number, preset beads is transferred to the tire building apparatus with the carriage as a unit. In FIG. 4, the carriage 33A at the loading position E is still in the course of stacking the preset beads. In this state, only the cartridges 32 are stacked on the other carriage in waiting. After loading a preset bead 32 on the carriage 33A at the loading position E, the bead-handling robot 23 takes out a cartridge from the carriage 33B adjacent to the loading position E and transfers it to the carriage 33A. In this way, the bead-handling robot 23 stacks up preset beads 32 and cartridge 32 alternately. When the number of preset beads 32 stacked on the carriage 33A reaches a given number, the carriage 33A is discharged and the adjacent carriage 33B is moved to the loading position E, with the only one cartridge left on the dolly 33B.

### EXAMPLES

In order to evaluate an effect on the improvement of the uniformity of a product tire using the preset bead core according to the tire manufacturing method of the present invention, ten tires were experimentally manufactured for each of Example, which was provided with the preset beads manufactured according to the tire manufacturing method of the present invention, and Conventional Example, which was provided with preset beads formed by winding a rubber with a cross sectional shape generally identical to that of the bead filler in the green tire for only one lap. The uniformities of them were measured and compared. As a result, it is shown that the RFV(radial force variation) of the Example tires are smaller than those of the Conventional Example tires by 5N in average. It, therefore, is appreciated that the uniformity of the tire is improved.

## Claims

1. A method of manufacturing a tire in which preset-beads (32) each preformed by mounting a bead filler (38) on a bead core (10) are disposed radially outward of a carcass band and both side portions of the carcass band are turned around the preset beads to build the tire, **characterized in that** said preset bead (32) is formed by winding and laminating a ribbon-shaped filler rubber (5) radially outward of the bead core (10) over several laps on a disk; and stripping the preset bead (32) from the disk (8) by stripping bars (13) to transfer the preset bead to a next process.

2. A method of manufacturing a tire as claimed in claim 1, wherein the ribbon-shaped bead filler rubber (5) is so directed that its thickness direction is aligned to the direction of the central axis of the bead core (10) and the ribbon-shaped bead filler rubber is wound and laminated on a side face of a disk (8) rotating about the central axis of the bead core.

3. An apparatus for forming a preset bead (32) for use in the tire manufacturing method according to claim 1 or 2, comprising;
a bead core-holding device (11, 12) for holding the bead core (10);
a disk (8) integrally rotating with the bead core-holding device to wind and laminate a ribbon-shaped bead filler rubber (5) on a disk surface;
an extruder (6) for extruding said ribbon-shaped filler rubber in accordance with its winding;
a ribbon-attaching roller (7) displaceably provided on the disk surface of the disk and pressing the extruded ribbon-shaped bead filler rubber against the disk; and
stripping bars (13) configured to be displaceable back and forth in the thickness direction of the disk (8) through slits (14) provided on the disk (8) to remove the preset bead from the disk.

4. A preset bead-forming apparatus as claimed in claim 3, wherein the bead core-holding device is composed of magnets (11) which attract and hold the side face of the bead core (10) and a centering device (12) which applies a force to an inner circumference face of the bead core attracted by the magnets to center the bead core, and said apparatus further comprises a ribbon-attaching roller position-controlling means controlling the position of said ribbon-attaching roller.

## Patentansprüche

1. Verfahren zur Herstellung eines Reifens, bei dem voreingestellte Wülste (32), die jeweils durch Montieren eines Kernreiters (38) auf einen Wulstkern (10) vorgeformt werden, radial nach außen von einem Karkassenband angeordnet werden, und bei dem beide Seitenabschnitte des Karkassenbandes um die voreingestellten Wülste gestülpt werden, um den Reifen aufzubauen, **dadurch gekennzeichnet, dass** die voreingestellte Wulst (32) mittels der folgenden Schritte geformt wird: Wickeln und Laminieren eines bandartigen Füllstoffgummis (5) radial nach außen vom Wulstkern (10) über mehrere Runden auf eine Scheibe; und Abziehen der voreingestellten Wulst (32) von der Scheibe (8) mittels Abziehstäben (13), um die voreingestellte Wulst zum nächsten Prozess weiterzuleiten.

2. Verfahren zur Herstellung eines Reifens nach Anspruch 1, bei dem der bandartige Kernreitergummi (5) so gerichtet wird, dass seine Dickenrichtung zur Richtung der Mittelachse des Wulstkernes (10) ausgerichtet ist und der bandartige Kernreitergummi auf eine Seitenfläche einer Scheibe (8) gewickelt und laminiert wird, die sich um die Mittelachse des Wulstkernes dreht.

3. Vorrichtung zum Formen einer voreingestellten Wulst (32) für eine Verwendung bei einem Reifenherstellungsverfahren nach Anspruch 1 oder 2, die aufweist:
eine Wulstkernhaltevorrichtung (11, 12) für das Halten des Wulstkernes (10);
eine Scheibe (8), die sich zusammenhängend mit der Wulstkernhaltevorrichtung dreht, um einen bandartigen Kernreitergummi (5) auf eine Scheibenfläche zu wickeln und zu laminieren;
einen Extruder (6) für das Extrudieren des bandartigen Füllstoffgummis in Übereinstimmung mit seiner Wicklung;
eine Bandanbringungsrolle (7), die verschiebbar auf der Scheibenoberfläche der Scheibe vorhanden ist und den extrudierten bandartigen Kernreitergummi gegen die Scheibe presst; und
Abstreifstäbe (13), die so ausgebildet sind, dass sie in der Dickenrichtung der Scheibe (8) durch die in der Scheibe (8) vorhandenen Schlitze (14) vorwärts und rückwärts verschiebbar sind, um die voreingestellte Wulst von der Scheibe zu entfernen.

4. Vorrichtung zum Formen einer voreingestellten Wulst nach Anspruch 3, bei der die Wulstkernhaltevorrichtung aus Magneten (11), die die Seitenfläche des Wulstkernes (10) anziehen und halten, und einer Zentriervorrichtung (12) besteht, die eine Kraft auf eine innere Umfangsfläche des Wulstkernes anwendet, der von den Magneten angezogen wird, um den Wulstkern zu zentrieren, und wobei die Vorrichtung außerdem ein Positionssteuermittel für die Bandanbringungsrolle aufweist, die die Position der Wandanbringungsrolle steuert.

## Revendications

1. Procédé de fabrication d'un bandage pneumatique, dans lequel des talons préajustés (32), préformés chacun en montant un bourrage sur tringle (38) sur une tringle (10), sont agencés radialement vers l'extérieur d'une bande de carcasse, les deux parties latérales de la bande de carcasse étant tournées autour des talons préajustés pour construire le bandage pneumatique, **caractérisé en ce que** ledit talon préajusté (32) est formé en enroulant et en stratifiant une gomme de bourrage sur tringle en forme de ruban (5) radialement vers l'extérieur de la tringle (10), sur plusieurs tours sur un disque ; et détachement du talon préajusté (32) du disque (8) par des barres de détachement (13) pour transférer le talon préajusté vers un nouveau processus.

2. Procédé de fabrication d'un bandage pneumatique selon la revendication 1, dans lequel une gomme de bourrage sur tringle en forme de ruban (5) est dirigée de sorte que sa direction de l'épaisseur est alignée avec la direction de l'axe central de la tringle (10), la gomme de bourrage sur tringle en forme de ruban étant enroulée et starifiée sur une face latérale d'un disque (8) tournant autour de l'axe central de la tringle.

3. Appareil pour former un talon préajusté (32) destiné à être utilisé dans le procédé de fabrication du bandage pneumatique selon la revendication 1 ou 2, comprenant :
un dispositif de retenue de la tringle (11, 12) pour retenir la tringle (10) ;
un disque (8), tournant d'une seule pièce avec le dispositif de retenue de la tringle pour enrouler et stratifier une gomme de bourrage sur tringle en forme de ruban (5) sur une surface du disque ;
une extrudeuse (6) pour extruder ladite gomme de bourrage sur tringle en forme de ruban en fonction de son enroulement ;
un rouleau de fixation du ruban (7) agencé de manière mobile sur la surface du disque et pressant la gomme de bourrage sur tringle en forme de ruban contre le disque ; et
des barres de détachement (13), pouvant être déplacées vers l'arrière et vers l'avant dans la direction de l'épaisseur du disque (8), à travers des fentes (14) formées sur le disque (8) pour retirer le talon préajusté du disque.

4. Appareil de formation d'un talon préajusté selon la revendication 3, dans lequel le dispositif de retenue de la tringle est composé d'aimants (11), attirant et retenant la face latérale de la tringle (10), et un dispositif de centrage (12), appliquant une force à une face circonférentielle interne de la tringle, attirée par les aimants, pour centrer la tringle, ledit appareil comprenant en outre un moyen de contrôle de la positon du rouleau de fixation du ruban, contrôlant la position dudit rouleau de fixation du ruban.
